(19) Europäisches Patentamt
European Patent Office
Office européen des brevets

(11) EP 1 723 187 B1

(12) **EUROPÄISCHE PATENTSCHRIFT**

(45) Veröffentlichungstag und Bekanntmachung des Hinweises auf die Patenterteilung:
**19.12.2007 Patentblatt 2007/51**

(21) Anmeldenummer: **05707388.4**

(22) Anmeldetag: **15.02.2005**

(51) Int Cl.:
***C08G 18/48*** *(2006.01)* ***C08G 18/76*** *(2006.01)*

(86) Internationale Anmeldenummer:
**PCT/EP2005/001488**

(87) Internationale Veröffentlichungsnummer:
**WO 2005/082967 (09.09.2005 Gazette 2005/36)**

(54) **HYDROPHOBE, NIEDRIGVISKOSE POLYOLE**

HYDROPHOBIC LOW-VISCOUS POLYOLS

POLYOLS HYDROPHOBES A FAIBLE VISCOSITE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **28.02.2004 DE 102004009818**

(43) Veröffentlichungstag der Anmeldung:
**22.11.2006 Patentblatt 2006/47**

(73) Patentinhaber: **Bayer MaterialScience AG
51368 Leverkusen (DE)**

(72) Erfinder:
- **NIESTEN, Meike
51061 Köln (DE)**
- **REESE, Jack
Hurricane, WV 25526 (US)**
- **SIMON, Joachim
41515 Grevenbroich (DE)**
- **RUTTMANN, Gerhard
51399 Burscheid (DE)**

(56) Entgegenhaltungen:
**EP-A- 0 002 253** **WO-A-92/21741**

- **DATABASE WPI Section Ch, Week 197337 Derwent Publications Ltd., London, GB; Class A23, AN 1973-54484U XP002324011 & JP 48 029530 B (CASHEW KK) 11. September 1973 (1973-09-11) in der Anmeldung erwähnt**

EP 1 723 187 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft neue hydrophobe, niedrigviskose Polyole, ein Verfahren zu ihrer Herstellung sowie darauf basierende lösemittelfreie Bindemittelgemische, welche insbesondere für Grundierungen von Bodenbeschichtungen geeignet sind.

Lösemittelfreie Zweikomponenten-Beschichtungssysteme (2K-Systeme) des Standes der Technik gliedern sind im wesentlichen in Epoxidharz-(2K-EP)-Systeme und Polyurethan-(2K-PUR)-Systeme.

Beschichtungen auf Basis von 2K-EP-Systemen verbinden eine gute mechanische Festigkeit mit einer hohen Beständigkeit gegen Lösemittel und Chemikalien. Zusätzlich zeichnen sie sich durch eine sehr gute Substrathaftung aus. Ein deutlicher Nachteil ist ihre schlechte Elastizität, insbesondere bei tiefen Temperaturen. Diese Sprödigkeit führt zu einer schlechten Rissüberbrückung durch die Beschichtung, so dass hier ein Angriff auf das Substrat erfolgen kann. Ein zusätzlicher Nachteil ist die sehr geringe Beständigkeit gegen organischen Säuren. Dies ist vor allem für Anwendungen im Lebensmittelbereich problematisch, da dort oftmals organische Säuren als Abfallprodukte freigesetzt werden.

Eine ausgewogene Kombination aus Härte und Elastizität ist dagegen die herausragende Eigenschaft der 2K-PUR-Beschichtungen und der größte Vorteil gegenüber 2K-EP-Beschichtungen. Außerdem ist bei ähnlichen Lösemittel- und Chemikalienbeständigkeiten die Beständigkeit gegenüber organischen Säuren von 2K-PUR-Beschichtungen wesentlich besser als von 2K-EP-Beschichtungen.

Aus ökologischen Gründen sollten Beschichtungsmittel lösemittelfrei sein, vor allem bei Dickschichtanwendungen, wie zum Beispiel Bodenbeschichtungen. Dies bedeutet, dass die Eigenviskosität der Bindemittelkomponente niedrig sein sollte.

Bei Dickschichtanwendungen auf Basis von 2K-PUR-Systemen besteht die Gefahr der Blasenbildung durch die $CO_2$-Bildung infolge der Wasser-Isocyanat Reaktion. Deswegen ist eine sehr niedrige Wasseraufnahme der Rohstoffe wichtig, damit solche Beschichtungen auch im feuchten Klima blasenfrei applizierbar sind. Da die hydroxyfunktionelle Komponente im Allgemeinen hydrophiler als die Polyisocyanatkomponente ist, ist es besonders wichtig, gerade hydrophobe hydroxyfunktionelle Komponenten einzusetzen.

Die hydroxyfunktionelle Bindemittelkomponente der 2K-PUR-Beschichtung kann auf verschiedenen chemischen Strukturtypen aufgebaut sein.

Während Polyesterpolyole sich durch eine niedrige Viskosität und relativ niedrige Wasseraufnahme auszeichnen, ist ihre Verseifungsstabilität nur gering, was ihre Verwendungsmöglichkeit für den Korrosionsschutz metallischer Substrate sowie zum Beschichten mineralischer (alkalischer) Untergründe stark einschränkt.

2K-PUR-Beschichtungen auf Basis von Polyacrylatpolyolen zeichnen sich durch gute Resistenz gegenüber Verseifung aus, nachteilig allerdings ist ihr relativ hohes Viskositätsniveau. Daher werden stets entweder Lösemittel oder Reaktivverdünner wie Polyetherpolyole oder polyfunktionelle Alkohole zur Viskositätseinstellung zugegeben. Genauso wie bei alleiniger Verwendung von Polyetherpolyolen als Vernetzer steigt dadurch in aller Regel das Wasseraufnahmeverhalten.

Eine ausreichende Hydrophobie lösemittelfreier Polyole wird im Stand der Technik oftmals durch Einsatz von Rizinusöl erreicht. (z.B. Saunders, Frisch; Polyurethanes, Chemistry and Technology, Teil 1 Chemistry Seiten 48 bis 53). Die damit hergestellten 2K-PUR-Beschichtungen sind aber nicht verseifungsstabil.

Harze, die von Cashew Nut Shell Liquid (CNSL; Öl der Cashewnussschale) abgeleitet sind, werden für Lacke und Beschichtungen eingesetzt (Shukia et al., in Paintindia, Februar 2002, Seite 29-32, Nayak, Natural Oil-Based Polymers: Opportunities und Challenges, in J.M.S.- Rev. Macromol. Chem. Phys., C40(1), 12-18, 2000). Solche Produkte sind sehr hydrophob und wegen der Abwesenheit von Esterbindungen sind sie verseifungsstabil. CNSL-basierende Harze enthalten phenolische OH-Gruppen, die zur Vernetzung durch Reaktion mit Polyisocyanaten genutzt werden können. Nachteiligt ist hier jedoch, dass die entstehenden phenolbasierenden Urethanbindungen unter feuchten, alkalischen Bedingungen nicht rückspaltestabil sind.

JP48-29530 beschreibt die Umsetzung von CNSL- oder Cardanol-Aldehyd-Kondensaten mit Alkylenoxiden wie Propylenoxid, wobei aus den phenolischen OH-Gruppen aliphatisch gebundene Hydroxylgruppen werden. Nachteilig an diesen Produkten ist die Tatsache, dass die Viskosität relativ hoch ist und für eine Verarbeitbarkeit der Zusatz von Lösemitteln notwendig ist.

Aufgabe der vorliegende Erfindung bestand daher in der Bereitstellung einer hydrophoben, niedrigviskosen Polyolkomponente, welche zu lösemittelfreien Bindemittelgemischen weiterverarbeitet werden kann und die vorstehend genannten Nachteile der mangelnden Beständigkeit der darauf basierenden Beschichtungen insbesondere im Bereich der Dickschichtanwendungen nicht aufweist.

Es wurde nun gefunden, dass Alkylenoxidaddukte an cardanolabgereicherte CNSL bestimmter Zusammensetzung die geforderten Polyoleigenschaften aufweisen.

Gegenstand der Erfindung ist ein Verfahren zur Herstellung hydrophober Polyole mit einer OH-Zahl von 140 bis 220 mg KOH/g und einer Viskosität bei 23°C von 1 000 bis 4 000 mPas, bei dem

A) eine Stoffmischung, welche

- einen OH-Gehalt von 180 bis 300 mg KOH/g,
- eine Viskosität bei 23°C von 5 000 bis 20 000 mPas und
- eine mittlere OH-Funktionalität von 2,8 bis 4,5 aufweist sowie ferner
- 5 bis 20 Gew.% Cardanol (3-Pentadecadienylphenol),
- 5 bis 10 Gew.% Cardol (3-Pentadecadienylresorcinol) und
- 1 bis 5 Gew.% 6-Methylcardol (2-Methyl-3-pentadecadienylresorcinol)

enthält mit

B) Alkylenoxiden (AO) unter Addition der AO-Monomere an die gegenüber AO-reaktiven Gruppen der Komponente A) umgesetzt wird,

wobei das Verhältnis der Mengen von A) zu B) 1:9 bis 9:1 beträgt und sich die Mengenangaben von Cardanol, Cardol und 6-Methylcardol mit den restlichen Bestandteilen der Komponente A) zu 100 Gew.-% aufaddieren.

Des Weiteren sind die nach dem erfindungswesentlichen Verfahren hergestellten Polyole ein Gegenstand der vorliegenden Erfindung.

Technisch wird Cardanol (3-Pentadecadienylphenol) aus Schalen von Cashewnusskernen bzw. der darin enthaltenen CNSL gewonnen.

Die CNSL wird dabei aus der Schicht zwischen Nuss und Schale der Cashew-Nuss exrahiert. Diese Zwischenschicht enthält hauptsächlich Anacardinsäure (anacardic acid, 2-Carboxy-3-pentadecadienylphenol) und verwandte Säuren mit verschieden Doppelbindungsgehalten sowie Cardol (m-Pentadecadienylresorcinol). Die Flüssigkeit wird durch Erhitzen aus der Zwischenschicht extrahiert, wobei die Säuren decarboxyliert werden. Die so erhaltenen Produkte enthalten Cardanol (I), Cardol (II) sowie verwandte Verbindungen mit unterschiedlicher Anzahl an Doppelbindungen. Eine typische Zusammensetzung eines solchen Extraktes ist wie folgt:

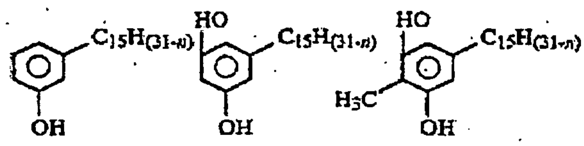

(I) (II) 2-methyl cardol

63% 11% 2%

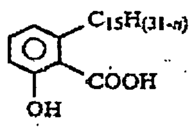

Polymer

anacardic acid

1% 23%

Die Seitenketten, welche gesättigt oder cis-ständig ungesättigt sind, können durch Polymerisation zu höhermolekularen Verbindungen ("Polymer") weiterreagieren.

Durch Destillation wird aus CNSL schließlich Cardanol isoliert. Der verbleibende Rückstand enthält neben höhermolekularen organischen Verbindungen typischerweise auch noch 5 bis 20 Gew.% Cardanol-Reste sowie 5 bis 10 Gew.% Cardol (3-Pentadecadienylresorcinol) und 1 bis 5 Gew.% 6-Methylcardol (2-Methyl-3-pentadecadienylresorcinol).

Bevorzugt wird in A) ein solcher Rückstand aus der Cardanol-Herstellung ausgehend von Cashew Nut Shell Liquid (CNSL) eingesetzt. Dieser weist neben den genannten Mengen an Cardanol, Cardol und 6-Methylcardol typischerweise 60 bis 80 Gew.-%, bevorzugt 65 bis 75 Gew.-% an gegebenenfalls phenolischen OH-funktionellen organischen Verbindungen eines zahlenmittleren Molekulargewichts $M_n$ > 700 g/mol auf, wobei sich die Mengenangaben der genannten Bestandteile des eingesetzten Rückstandes zu 100 Gew.-% aufaddieren.

Bevorzugt weist die Mischung der Komponente A) einen OH-Gehalt von 200 bis 270 mg KOH/g auf.

Bevorzugt weist die Mischung der Komponente A) eine Viskosität bei 23°C von 5 000 bis 20 000 mPas und bevorzugt eine mittlere OH-Funktionalität von 3 bis 4 auf.

Derartige Rückstände aus der Cardanolherstellung sind bei der Firma Cardolite Chemical N.V., Belgien unter der Bezeichnung NX-4670 erhältlich. Sie weisen einen OH-Gehalt von 207 bis 250 mg KOH/g und eine Viskosität bei 23°C von 5 000 bis 20 000 mPas auf.

Bevorzugt beträgt im erfindungsgemäßen Verfahren das Verhältnis der Mengen von A) zu B) 1 : 5 bis 5 : 1.

Die Alkoxylierung der Komponente A) erfolgt durch Polyaddition der Verbindungen der Komponente B) an aktive Wasserstoffatome aufweisende Gruppen der Komponente A).

Als Alkylenoxiden kommen bevorzugt Ethylenoxid, Propylenoxid, Butylenoxid sowie deren Mischungen zum Einsatz. Bei Einsatz von zwei oder mehr Alkylenoxid-Typen können diese blockweise oder statistisch polyaddiert werden. Näheres ist "Ullmanns Encyclopädie der industriellen Chemie", Band A21, 1992, S. 670f zu entnehmen.

Die Polyadditionsreaktion kann dabei katalysatorfrei oder unter Einsatz eines Katalysators durchgeführt werden. Hierfür kommen die dem Fachmann an sich bekannten Verbindungen und Katalysator-Systeme wie beispielsweise Alkalimetallhydroxide oder Doppel-Metall-Cyanid-Katalysatoren (DMC-Katalysatoren) in Betracht.

Die Verfahrensweise zur Polyaddition von Alkylenoxiden an aktive-Wasserstoffe enthaltende Verbindungen ist dem Fachmann geläufig. Typischerweise wird die Komponente A) vorgelegt und unter Polyaddition mit Komponente B) versetzt.

Das erfindungsgemäße Verfahren wird im allgemeinen bei Temperaturen von 20 bis 200°C, bevorzugt von 40 bis 180°C, besonders bevorzugt von 50 bis 150°C durchgeführt. Die Reaktion kann bei Gesamtdrücken von 0,001 bis 20 bar durchgeführt werden. Die Polyaddition kann kontinuierlich oder diskontinuierlich, z.B. in einem Batch- oder Semibatchverfahren durchgeführt werden.

Die nach dem erfindungsgemäßen Verfahren erhältlichen Polyole weisen bevorzugt eine Viskosität bei 23°C von 1 000 bis 3 500 mPas und eine OH-Zahl von 150 bis 220 mg KOH/g auf.

Die so erhältlichen erfindungsgemäßen Polyole zeichnen sich durch eine besonders hohe Hydrophobie aus. Sie eignen sich daher besonders zur Herstellung von 2-K Polyurethan-Beschichtungssystemen (2-K PUR-Systeme) für Dickschichtanwendungen beispielsweise im Bau-Bereich.

Daher sind ein weiterer Gegegenstand der vorliegenden Erfindung Polyurethansysteme (PUR-Systeme), bevorzugt 2K-PUR-Systeme, mindestens enthaltend

a) ein oder mehrere der erfindungsgemäßen Polyole sowie

b) ein oder mehrere Polyisocyanate.

Als Polyisocyanate der Komponente b) werden typischerweise organische Polyisocyanate mit einer mittleren NCO-Funktionalität von mindestens 2 und einem Molekulargewicht von mindestens 140 g/mol eingesetzt. Gut geeignet sind vor allem (i) unmodifizierte organische Polyisocyanate des Molekulargewichtsbereichs 140 bis 300 g/mol, (ii) Lackpolyisocyanate eines Molekulargewichts im Bereich von 300 bis 1000 g/mol sowie (iii) Urethangruppen-aufweisende NCO-Prepolymere eines über 1000 g/mol liegenden Molekulargewichtes oder Gemische aus (i) bis (iii).

Beispiele für Polyisocyanate der Gruppe (i) sind 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1-Isocyanato-3,3,5-trimethyl-5-isocyanatomethyl-cyclohexan (IPDI), 1-Isocyanato-1-methyl-4-(3)-isocyanatomethyl-cyclohexan, Bis-(4-isocyanatocyclohexyl)methan, 1,10-Diisocyanatodecan, 1,12-Diisocyanato-dodecan, Cyclohexan-1,3- und -1,4-diisocyanat, Xylylendiisocyanat-Isomere, Triisocyanatononan (TIN), 2,4-Diisocyanatotoluol oder dessen Gemische mit 2,6-Diisocyanatotoluol mit bevorzugt, bezogen auf Gemische, bis zu 35 Gew.-% 2,6-Diisocyanatotoluol, 2,2'-, 2,4'-, 4,4'-Diisocyanatodiphenylmethan oder technische Polyisocyanatgemische der Diphenylmethanreihe oder beliebige Gemische der genannten Isocyanate. Bevorzugt kommen dabei die Polyisocyanate der Diphenylmethanreihe, besonders bevorzugt als Isomerengemische, zum Einsatz.

Polyisocyanate der Gruppe (ii) sind die an sich bekannten Lackpolyisocyanate. Unter dem Begriff "Lackpolyisocyanate" sind im Rahmen der Erfindung Verbindungen oder Gemische von Verbindungen zu verstehen, die durch an sich bekannte Oligomerisierungsreaktion von einfachen Diisocyanaten der unter (i) beispielhaft genannten Art erhalten werden. Geeignete Oligomerisierungsreaktionen sind z.B. die Carbodiimidisierung, Dimerisierung, Trimerisierung, Biuretisierung, Harnstoffbildung, Urethanisierung, Allophanatisierung und/oder Cyclisierung unter Ausbildung von Oxadiazinstrukturen. Oftmals laufen bei der "Oligomerisierung" mehrere der genannten Reaktionen gleichzeitig oder nacheinander ab.

Bevorzugt handelt es sich bei den "Lackpolyisocyanaten" (ii) um Biuretpolyisocyanate, Isocyanuratgruppen-aufweisende Polyisocyanate, Isocyanurat- und Uretdiongruppen-aufweisende Polyisocyanatgemische, Urethan- und/oder Allophanatgruppen-aufweisende Polyisocyanate oder um Isocyanurat- und Allophanatgruppen-aufweisende Polyisocyanatgemische auf Basis einfacher Diisocyanate.

Die Herstellung von derartigen Lackpolyisocyanaten ist bekannt und beispielsweise in der DE-A 1 595 273, DE-A 3 700 209 und DE-A 3 900 053 oder in der EP-A-0 330 966, EP-A 0 259 233, EP-A- 0 377 177, EP-A-0 496 208, EP-A-0 524 501 oder US-A 4 385 171 beschrieben.

Polyisocyanate der Gruppe (iii) sind die an sich bekannten Isocyanatgruppen aufweisenden Prepolymere auf Basis von einfachen Diisocyanaten der oben beispielhaft genannten Art und/oder auf Basis von Lackpolyisocyanaten (ii) einerseits und organischen Polyhydroxyverbindungen eines über 300 g/mol liegenden Molekulargewichts andererseits. Während es sich bei den Urethangruppen-aufweisenden Lackpolyisocyanaten der Gruppe (ii) um Derivate von niedermolekularen Polyolen des Molekulargewichtsbereichs 62 bis 300 g/mol handelt (geeignete Polyole sind beispielsweise Ethylenglykol, Propylenglykol, Trimethylolpropan, Glycerin oder Gemische dieser Alkohole), werden zur Herstellung der NCO-Prepolymeren der Gruppe (iii) Polyhydroxylverbindungen eines Molekulargewichts $M_n$ über 300 g/mol, bevorzugt über 500 g/mol, besonders bevorzugt von 500 bis 8000 g/mol eingesetzt. Derartige Polyhydroxylverbindungen sind insbesondere solche, die pro Molekül 2 bis 6, bevorzugt 2 bis 3 Hydroxylgruppen aufweisen und aus der Gruppe, bestehend aus Ether-, Ester-, Thioether-, Carbonat- und Polyacrylatpolyolen und Gemischen aus derartigen Polyolen ausgewählt sind.

Bei der Herstellung der NCO-Prepolymeren (iii) können die genannten höhermolekularen Polyole auch in Abmischungen mit den genannten niedermolekularen Polyolen zur Anwendung gelangen, so dass unmittelbar Gemische aus niedermolekularen, Urethangruppen aufweisenden Lackpolyisocyanaten (ii) und höhermolekularen NCO-Prepolymeren (iii) resultieren.

Zur Herstellung der NCO-Prepolymeren (iii) oder deren Gemische mit den Lackpolyisocyanaten (ii) werden Diisocyanate (i) der oben beispielhaft genannten Art oder Lackpolyisocynatate der unter (ii) beispielhaft genannten Art mit den höhermolekularen Hydroxylverbindungen oder deren Gemischen mit niedermolekularen Polyhydroxylverbindungen der beispielhaft genannten Art unter Einhaltung eines NCO/OH Äquivalentverhältnisses von 1,1:1 bis 40:1, bevorzugt 2:1 bis 25:1 unter Urethanbildung umgesetzt. Gegebenenfalls kann bei Verwendung eines Überschusses an destillierbarem Ausgangsdiisocyanat dieser im Anschluß an die Umsetzung destillativ entfernt werden, so dass monomerenfreie NCO-Prepolymere, d.h. Gemische aus Ausgangsdiisocyanaten (i) und echten NCO-Prepolymeren (iii).

Bevorzugt werden die genannten Polyisocyanate in unblockierter Form eingesetzt, so dass 2K-PUR-Systeme erhalten werden. Möglich hingegen ist aber auch die Verwendung von Blockierungsmitteln zur Blockierung der NCO-Gruppen der vorstehend genannten Polyisocyanate, so dass diese mit den erfindungswesentlichen Polyolen zu lagerstabilen 1K-PUR-Systemen formuliert werden können.

In den erfindungsgemäßen PUR-Systemen werden die Mengen der Komponenten a), b) und gegebenenfalls weiterer Bestandteile so gewählt, dass ein NCO : OH-Äquivalentverhältnis von 0,5 : 1 bis 2,0 : 1, bevorzugt 0,8 : 1 bis 1,5 : 1, resultiert.

Neben a) und b) können in den erfindungsgemäßen PUR-Systemen weitere Bestandteile wie zusätzliche höher oder niedermolekulare Polyole, Katalysatoren oder Hilfs- und Zusatzmittel enthalten sein.

Als Katalysatoren können die an sich in der Polyurethanchemie bekannten Verbindungen zur Beschleunigung der NCO/OH-Reaktion einsetzt werden (vgl. "Kunststoff Handbuch 7, Polyurethane" Carl-Hanser-Verlag, München - Wien, 1984, S. 97-98).

Dies können zum Beispiel sein: tertiäre Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octoat, Zinn(II)-ethylcaproat, Zinn(II)-palmitat, Dibutylzinn(IV)-dilaurat und Molybdänglykolat oder beliebige Gemische solcher Katalysatoren. Vorzugsweise als Verbindungen der Komponente C) sind Zinnverbindungen zu verwenden.

Als Hilfsmittel oder Zusatzstoffe können in den PUR-Systemen z.B. oberflächenaktive Substanzen, interne Trennmittel, Füllstoffe, Farbstoffe, Pigmente, Flammschutzmittel, Hydrolyseschutzmittel, Mikrobizide, Verlaufshilfsmittel, Antioxidantien wie 2,6-Di-tert-butyl-4-methylphenol, UV-Absorber vom Typ 2-Hydroxyphenyl-benzotriazol oder Lichtschutzmittel vom Typ der am Stickstoffatom substituierten oder unsubstituierten HALS-Verbindungen wie Tinuvin® 292 und Tinuvin® 770 DF (Ciba Spezialitäten GmbH, Lampertheim, DE) oder andere handelsübliche Stabilisierungsmittel, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind, eingesetzt werden.

Zur Herstellung der erfindungsgemäßen PUR-Systeme werden die Komponenten a), b) und ggf. weitere Vernetzer-Komponenten so miteinander vermischt, dass ein NCO : OH-Äquivalentverhältnis von 0,5 : 1 bis 2,0 : 1, bevorzugt 0,8 : 1 bis 1,5 : 1 resultiert. Während oder nach dieser Vermischung der Einzelkomponenten können, falls gewünscht, die genannten Hilfs- und Zusatzstoffe sowie Katalysatoren zugemischt werden.

Die Applikation der erfindungsgemäßen PUR-Systeme kann nach in der Technik an sich üblichen Verfahren wie Streichen, Rakeln, Spritzen, Tauchen erfolgen.

Die erfindungsgemäßen PUR-Systeme zeichnen sich durch ihre nur sehr geringe Wasseraufnahme von bevorzugt kleiner 7 Gew.-%, besonders bevorzugt kleiner 4 Gew.-% aus. Zur Ermittlung der Wasseraufnahme wird eine Probe 21 Tagen bei 23°C und 97 % Luftfeuchtigkeit offen gelagert und die Gewichtszunahme bestimmt. Aufgrund dieser herausragenden Eigenschaft können diese Systeme auch in großen Schichtdicken blasenfrei appliziert und ausgehärtet werden.

Bevorzugte Schichtdicken betragen dabei von 0,5 bis 10 mm, bevorzugt von 0,7 bis 6 mm, wobei die Herstellung dünnerer oder dickerer Schichten damit nicht ausgeschlossen wird.

Grundsätzlich können mit den erfindungsgemäßen PUR-Systemen alle Arten von Materialien beschichtet werden. Beispielhaft zu nennen sind Glas, Holz, Metall, mineralische Untergründe wie Beton.

Bevorzugt werden die PUR-Systeme zur Herstellung von Beschichtungen zum Schutz metallischer Substrate gegen mechanische Beschädigung und Korrosion sowie zum Schutz mineralischer Untergründe, wie z.B. Beton, gegen Umwelteinflüsse und mechanische Beschädigung verwendet.

## Beispiele

Sofern nicht abweichend vermerkt beziehen sich alle Prozentangaben auf das Gewicht.

Die dynamischen Viskositäten wurden nach DIN 53019 bei 23°C mit einem Rotationsviskosimeter (Viscotester 550, Thermo Hakke GmbH, D-76227 Karlsruhe) bei einem Schergefälle von 40 $s^{-1}$ bestimmt.

Die Shore D Härte wurde nach DIN 53505 bestimmt.

Die Wasseraufnahme wurde durch die Gewichtszunahme von einer Probe nach 21 Tagen offener Lagerung bei 23°C und 97 % Luftfeuchtigkeit bestimmt.

Die Wasseraufnahme berechnet sich dabei nach folgender Formel:

$$\text{Wasseraufnahme}(\%) = \frac{100 \times \text{Gewicht}_{21\text{Tage}} - \text{Gewicht}_{\text{anfang}}}{\text{Gewicht}_{\text{anfang}}}$$

Cardolite® NX-4670:

Nebenprodukt aus der Cardanol Herstellung mit phenolischen OH-Gruppen mit einer OH-Zahl von 207 bis 250 mg KOH/g und einer Viskosität bei 23°C von 5 000 bis 20 000 mPas, Cardolite Chemical N.V., Belgien.

Desmodur® VL:

Polyisocyanat auf Basis von 4,4'-Diphenylmethandiisocyanat mit einem NCO-Gehalt von 31,5 Gew.-% und einer Viskosität bei 23°C von 90 mPas, Bayer AG, Leverkusen, DE.

Herstellung Polyol A-I

4 000 Gramm Cardolite® NX-4670 mit einem pH-Wert von 11 wurden in einem 10 Liter Reaktor vorgelegt. Der Reaktor wurde mit Stickstoff inertisiert und bis 130°C aufgeheizt. Anschließend wurden 2 000 Gramm Propylenoxid über einen Zeitraum von 4 Stunden zugegeben. Nach beendeter Reaktion wurde das Produkt abgekühlt und aus dem Reaktor abgelassen. 2 000 Gramm dieses Produktes wurden dann mit 66,6 g Wasser und 12 %-iger Schwefelsäure bei 80°C während 60 Minuten vermischt. Dabei wurde soviel Schwefelsäure zugegeben bis ein pH-Wert von 7 erreicht wurde. Das so erhaltene Endprodukt hatte eine OH-Zahl von 188 mg KOH/g, eine Viskosität bei 23°C von 1 770 mPas, einen pH-Wert von 7,1 und eine Wasseraufnahme von 5,1 Gew.%

Herstellung Polyol A-II.

4 800 Gramm Cardolite® NX-4670 mit einem pH-Wert von 11 wurden in einem 10 Liter Reaktor vorgelegt. Der Reaktor wurde mit Stickstoff inertisiert und bis 130°C aufgeheizt. Anschließend wurden 1 200 Gramm Propylenoxid über einen Zeitraum von 4 Stunden zugegeben. Nach beendeter Reaktion wurde das Produkt abgekühlt und aus dem Reaktor abgelassen. 2 000 Gramm dieses Produktes wurden dann mit 66,6 g Wasser und 12%-ige Schwefelsäure bei 80°C während 60 Minuten vermischt. Dabei wurde soviel Schwefelsäure zugegeben bis ein pH-Wert von 7 erreicht wurde.

Anschließend wurde das enthaltene Wasser destillativ entfernt und das Produkt durch Filtration mittels Tiefenfilter T 850 der Fa. Seitz, DE von ausgefällten Salzen befreit. Das Endprodukt hatte eine OH-Zahl von 200 mg KOH/g, eine Viskosität bei 23°C von 1 416 mPas, einen pH-Wert von 6,7 und eine Wasseraufnahme von 3,5 Gew.%.

Herstellung Beispiel Polyol A-III

2000 Gramm Cardolite® NX-4670 wurden mit Wasser vermischt und durch Zugabe von 12-%ige Schwefelsäure bis zu einem pH-Wert von 7 neutralisiert. Anschließend wurde das enthaltene Wasser destillativ entfernt und das Produkt durch Filtration mittels Tiefenfilter T 850 der Fa. Seitz, DE von ausgefällten Salzen befreit. Das Endprodukt hatte eine OH-Zahl von 250 mg KOH/g, eine Viskosität von 2 099 mPas und einen pH-Wert von 7,9.

**Beispiele 1 bis 3**

Zur Herstellung der erfindungsgemäßen 2-K PUR-Systeme wurde die Polyolkomponente mit der Polyisocyanatkomponente in einem NCO/OH-Verhältnis von 1 zu 1 vermischt und auf einem Kunststoffsubstrat mittels Gießen in einer Schichtdicke von 3 bis 5 mm appliziert. Die anschließende Aushärtung erfolgte bei Raumtemperatur.

**Beispiele (1,2 erfindungsgemäß, 3 Vergleich)**

| Zusammensetzung (Gew.%) | 1 | 2 | 3 |
|---|---|---|---|
| Polyol A-1 | 70,2 | | |
| Polyol A-II | | 67,8 | |
| Polyol A-III | | | 63,0 |
| Desmodur® VL | 30,8 | 32,2 | 37,0 |
| Verarbeitungszeit* (min) | 50 | 65 | - |
| Härte (Shore D) | 67 | 70 | - |
| Lagerung bei 70°C in Wasser | | | |
| Prüfkörper unbeschädigt nach | | | |
| 1 T | ja | ja | nein |
| 7 T | ja | ja | nein |
| 14 T | ja | ja | nein |
| Lagerung bei 70°C in 10%-iger Natronlauge | | | |
| Prüfkörper unbeschädigt nach | | | |
| 1 T | ja | ja | nein |
| 7 T | ja | ja | nein |
| 14 T | ja | ja | nein |

*Zeit in dem die Mischung noch fließfähig und manuell verarbeitbar ist

Wie Vergleichsbeispiel 3 zeigt wird ohne Alkoxylierung keine ausreichende Beständigkeit gegen feuchte und alkalische Bedingungen erreicht.

**Patentansprüche**

1. Verfahren zur Herstellung hydrophober Polyole mit einer OH-Zahl von 140 bis 220 mg KOH/g und einer Viskosität bei 23°C von 1 000 bis 4 000 mPas, bei dein

   A) eine Stoffmischung, welche einen OH-Gehalt von 180 bis 300 mg KOH/g,
   eine Viskosität bei 23°C von 5 000 bis 20 000 mPas und
   eine mittlere OH-Funktionalität von 2,8 bis 4,5 aufweist sowie ferner

5 bis 20 Gew.% Cardanol (3-Pentadecadienylphenol),
5 bis 10 Gew.% Cardol (3-Pentadecadienylresorcinol) und
1 bis 5 Gew.% 6-Methylcardol (2-Methyl-3-pentadecadienylresorcinol)
enthält, mit
B) Alkylenoxiden (AO) unter Addition der AO-Monomere an die gegenüber AO-reaktiven Gruppen der Komponente A) umgesetzt wird,

wobei das Verhältnis der Mengen von A) zu B) 1:9 bis 9:1 beträgt und sich die Mengenangaben von Cardanol, Cardol und 6-Methylcardol mit den restlichen Bestandteilen der Komponente A) zu 100 Gew.-% aufaddieren.

**2.** Verfahren zur Herstellung hydrophober Polyole gemäß Anspruch 1, **dadurch gekennzeichnet, dass** in A) ein Rückstand aus der Cardanolgewinnung ausgehend von CNSL (cashew nut shell liquid) eingesetzt wird.

**3.** Verfahren zur Herstellung hydrophober Polyole gemäß Anspruch 1 oder 2, **dadurch gekennzeichnet, dass** in B) Ethylenoxid, Propylenoxid, Butylenoxid oder deren Mischungen eingesetzt werden.

**4.** Verfahren zur Herstellung hydrophober Polyole gemäß einem der Ansprüche 1 bis 3, **dadurch gekennzeichnet, dass** das Verhältnis der Mengen von A) zu B) 1 : 5 bis 5 : 1 beträgt.

**5.** Hydrophobe Polyole erhältlich nach einen Verfahren gemäß einem der Ansprüche 1 - 4.

**6.** Polyurethansysteme (PUR-Systeme), mindestens enthaltend

a) ein oder mehrere hydrophobe Polyole gemäß Anspruch 5 sowie
b) ein oder mehrere Polyisocyanate.

**7.** Beschichtungen, Verklebungen, Dicht- oder Formmassen erhältlich unter Verwendung hydrophober Polyole gemäß Anspruch 5.

**8.** Substrate beschichtet mit Beschichtungen nach Anspruch 7.

## Claims

**1.** A method for producing hydrophobic polyols having an OH value of 140 to 220 mg of KOH/g and a viscosity at 23°C of 1000 to 4000 mPa·s, in which

A) a mixture of substances, which has an OH content of 180 to 300 mg of KOH/g,
a viscosity at 23°C of 5000 to 20000 mPa·s and
an average OH functionality of 2.8 to 4.5 and furthermore contains
5 to 20 wt.% of cardanol (3-pentadecadienylphenol),
5 to 10 wt.% of cardol (3-pentadecadienylresorcinol) and
1 to 5 wt.% of 6-methylcardol (2-methyl-3-pentadecadienylresorcinol)
is reacted with
B) alkylene oxides (AO) with addition of AO monomers onto the AO-reactive groups of component A),

wherein the ratio of quantities of A) to B) amounts to 1:9 to 9:1 and the stated quantities of cardanol, cardol and 6-methylcardol add up, together with the remaining constituents of component A), to 100 wt.%.

**2.** A method for producing hydrophobic polyols according to claim 1, **characterised in that** a residue from the isolation of cardanol from CNSL (cashew nut shell liquid) is used in A).

**3.** A method for producing hydrophobic polyols according to claim 1 or claim 2, **characterised in that** ethylene oxide, propylene oxide, butylene oxide or mixtures thereof are used in B).

**4.** A method for producing hydrophobic polyols according to any one of claims 1 to 3, **characterised in that** the ratio of quantities of A) to B) amounts to 1:5 to 5:1.

**5.** Hydrophobic polyols obtainable by a method according to any one of claims 1-4.

**6.** Polyurethane systems (PU systems) at least containing

a) one or more hydrophobic polyols according to claim 5 and
b) one or more polyisocyanates.

**7.** Coatings, adhesive bonds, sealants or moulding compositions obtainable using hydrophobic polyols according to claim 5.

**8.** Substrates coated with coatings according to claim 7.

**Revendications**

**1.** Procédé de production de polyols hydrophobes présentant un indice hydroxyle compris entre 140 et 220 mg de KOH/g et une viscosité à 23 °C, comprise entre 1 000 et 4 000 mPa.s, dans lequel on fait réagir

A) un mélange de matières qui présentent une teneur en groupes OH comprise entre 180 et 300 mg de KOH/g, une viscosité à 23 °C comprise entre 5 000 et 20 000 mPa.s et
une fonctionnalité hydroxyle moyenne comprise entre 2,8 et 4,5 et, contenant en outre,
5 à 20 % en poids de cardanol (3-pentadécadiénylphénol),
5 à 10 % en poids de cardol (3-pentadécadiénylrésorcinol) et
1 à 5 % en poids de 6-méthylcardol (2-méthyl-3-pentadécadiènylrésorcinol)
avec
B) des oxydes d'alkylène (OA), en additionnant les monomères d'OA aux groupes du composant A) réactifs vis-à-vis des OA,
les proportions de A) et de B) étant entre elles dans un rapport compris entre 1:9 et 9:1 et les indications des proportions de cardanol, de cardol et de 6-méthylcardol s'additionnant avec les autres constituants du composant A) pour faire 100 % en poids.

**2.** Procédé de production de polyols hydrophobes selon la revendication 1, **caractérisé en ce qu'**un résidu de l'extraction du cardanol à partir de CNSL (cashew nut shell liquid-baume de cajou) est mis en oeuvre dans A).

**3.** Procédé de production de polyols hydrophobes selon une des revendications 1 ou 2, **caractérisé en ce que** de l'oxyde d'éthylène, de l'oxyde de propylène, de l'oxyde de butylène ou des mélanges de ceux-ci sont mis en oeuvre dans B).

**4.** Procédé de production de polyols hydrophobes selon une des revendications 1 à 3, **caractérisé en ce que** les proportions de A) et de B) sont entre elles dans un rapport compris entre 1:5 et 5:1.

**5.** Polyols hydrophobes pouvant être obtenus selon un procédé conforme à une des revendications 1 à 4.

**6.** Systèmes polyuréthane (systèmes PUR) contenant au moins

a) un ou plusieurs polyols hydrophobes selon la revendication 5 et
b) un ou plusieurs polyisocyanates.

**7.** Revêtements, collages, matières d'étanchéité ou matières moulables pouvant être obtenus en utilisant des polyols hydrophobes selon la revendication 5.

**8.** Substrats revêtus des revêtements selon la revendication 7.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 48029530 A
- DE 1595273 A
- DE 3700209 A
- DE 3900053 A
- EP 0330966 A
- EP 0259233 A
- EP 0377177 A
- EP 0496208 A
- EP 0524501 A
- US 4385171 A


### In der Beschreibung aufgeführte Nicht-Patentliteratur


- **SAUNDERS ; FRISCH.** *Polyurethanes, Chemistry and Technology, Teil 1 Chemistry,* 48-53
- **SHUKIA et al.** *Paintindia,* Februar 2002, 29-32
- **NAYAK.** Natural Oil-Based Polymers: Opportunities und Challenges. *J.M.S.- Rev. Macromol. Chem. Phys.,* 18. Dezember 2000, vol. C40 (1
- *Ullmanns Encyclopädie der industriellen Chemie,* 1992, vol. A21, 670f
- Kunststoff Handbuch 7, Polyurethane. Carl-Hanser-Verlag, 1984, 97-98
- **A. VALET.** Stabilization of Polymeric Materials. Vincentz Verlag, 1996
- **H. ZWEIFEL.** Appendix. Springer Verlag, 1997, vol. 3, 181-213